# EUROPEAN PATENT APPLICATION

(11) **EP 4 600 023 A1**
(43) Date of publication of application: **13.08.2025**
(21) Application number: 23874704.2
(22) Date of filing: 25.09.2023
(51) Int. Cl.: B29C 65/02

(54) **METHOD FOR PRODUCING CURRENT COLLECTOR FOIL EQUIPPED WITH RESIN FILM**

(30) Priority: 03.10.2022 JP 2022159487
(71) Applicant: FUJIFILM Corporation, Tokyo 106-8620 (JP)
(72) Inventor: FUKUNAGA, Akihito, ashigara-shi, Kanagawa 250-0193 (JP); IWASE, Eijiro, ashigara-shi, Kanagawa 250-0193 (JP)
(74) Representative: Meissner Bolte Partnerschaft mbB
(86) International application number: PCT/JP2023/034791
(87) International publication number: WO 2024/075576

(57) **Abstract**

A method of manufacturing a current collector foil with a resin film includes a step A of cutting a metal foil for a current collector foil into sheets, a step B of allowing a movable stage to hold the cut metal foil for each sheet by suction and allowing the movable stage to move the metal foil held by suction onto a resin film, and a step C of bringing the resin film into contact with the metal foil to heat fusion-weld the resin film to the metal foil, in which the movable stage includes a plate-like body including a heating-suction region, and an area of the heating-suction region is smaller than an area of the cut metal foil.

## Description

### BACKGROUND OF THE INVENTION

### 1. Field of the Invention

The present disclosure relates to a method of manufacturing a current collector foil with a resin film.

### 2. Description of the Related Art

In recent years, various techniques related to a quasi-solid state battery (also referred to as a semi-solid state battery) and a solid state battery have been studied. JP2021-530829A relates to a technique for continuously and/or semi-continuously manufacturing a semi-solid electrode and a battery in which the semi-solid electrode is incorporated, and discloses a method that includes continuously distributing semi-solid electrode slurry on a current collector, separating the semi-solid electrode slurry into separate portions, and cutting the current collector to form completed electrodes.

JP2018-524759A discloses a method of manufacturing an electrochemical cell, and the method includes a step of disposing a first current collector on a first portion of a pouch material, a step of disposing a first electrode material on the first current collector, a step of disposing a second current collector on a second portion of the pouch material, a step of disposing a second electrode material on the second current collector, a step of disposing a separator on at least one of the first electrode material or the second electrode material, a step of folding the pouch material along a folding line between the first portion and the second portion of the pouch, and a step of sealing the pouch material to form a pouch in which an electrochemical cell is housed.

Meanwhile, JP1996-224785A (JP-H08-224785A) discloses a method of bonding two or more film sheets, as a technique for bonding a plurality of film sheets that are poorly freestanding. The method includes fixing one film sheet on a bonding table including a plurality of suction holes by suction, applying an adhesive to at least two sides of the film sheet facing each other, stacking the other film sheet, which is to be bonded, on the film sheet to which the adhesive is applied, and then charging both the film sheets with static electricity to fix both the film sheets, and pressure-bonding the fixed film sheets from above with a roller.

### SUMMARY OF THE INVENTION

In the manufacture of a quasi-solid state battery, a current collector foil with a resin film in which a plurality of metal foils cut into a predetermined shape are bonded onto a continuous resin film at predetermined intervals may be used. Examples of one aspect of a method of manufacturing such a current collector foil with a resin film include a manufacturing method that includes cutting a metal foil into a predetermined shape to prepare a laminate in which a plurality of metal foils are laminated, peeling off the metal foils from the laminate and moving the metal foils onto a continuous resin film, and heat fusion-welding the metal foils to the resin film. Further, in a case where a battery cell is assembled in a so-called pouch form using a current collector foil with a resin film, a region (also referred to as a "tab portion") where both the current collector foil and the resin film are not heat fusion-welded to each other is also required to be present between the current collector foil and the resin film, in order to lead an electrical wire to the outside of the pouch.

However, in the manufacturing method as described above, it has been found that it is difficult to peel off the metal foils one by one since the metal foils stick to each other due to burrs, electric charging, and the like at the end portions of the metal foils in the laminate in which the plurality of metal foils are overlapped, and that wrinkles occur in a case where the metal foil is placed on the resin film and then the resin film and the metal foil are heat fusion-welded to each other, and that it is difficult not to heat fusion-weld a predetermined portion of the metal foil to the resin film.

An object of an embodiment of the present disclosure is to provide a method of manufacturing a current collector foil with a resin film, from which a current collector foil with a resin film in which a metal foil can be bonded to a resin film at a predetermined position with high accuracy and the occurrence of wrinkles is suppressed is obtained.

The present disclosure includes the following aspects.
<1> A method of manufacturing a current collector foil with a resin film, comprising:
   a step A of cutting a metal foil for a current collector foil into sheets;
   a step B of allowing a movable stage to hold the cut metal foil for each sheet by suction and allowing the movable stage to move the metal foil held by suction onto a resin film; and
   a step C of bringing the resin film into contact with the metal foil to heat fusion-weld the resin film to the metal foil,
   in which the movable stage includes a plate-like body including a heating-suction region, and an area of the heating-suction region is smaller than an area of the cut metal foil.
<2> The method of manufacturing a current collector foil with a resin film according to <1>,
   in which, in the step C, the metal foil moved by the movable stage and the resin film wrapped around a roller are brought into contact with each other and the roller and the movable stage are moved relative to each other to heat fusion-weld the resin film to the metal foil.
<3> The method of manufacturing a current collector foil with a resin film according to <1> or <2>,
   in which a region in which the metal foil and the resin film are not heat fusion-welded to each other is formed at a part of the metal foil in the step C, and the method includes a step D of pressing a region of the metal foil, which is not heat fusion-welded to the resin film, against the resin film to flatten the region of the metal foil after the step C.
<4> The method of manufacturing a current collector foil with a resin film according to any one of <1> to <3>,
   in which a thickness of the resin film is in a range of 4 µm to 50 µm.
<5> The method of manufacturing a current collector foil with a resin film according to <4>,
   in which the resin film includes a heat fusion-welded layer and a plastic substrate, and a thickness of the heat fusion-welded layer and a thickness of the plastic substrate satisfy a relationship shown in Expression 1. 0.1 ≤ [thickness of heat fusion-welded layer] ÷ [thickness of plastic substrate] ≤ 1.00
<6> The method of manufacturing a current collector foil with a resin film according to any one of <1> to <5>,
   in which the plate-like body, which includes the heating-suction region and is included in the movable stage, includes a plurality of suction holes and a thickness of the metal foil and an average opening diameter of the suction holes satisfy a relationship shown in Expression 2. 0.005 ≤ [thickness of metal foil] ÷ [average opening diameter of suction holes] ≤ 0.1
<7> The method of manufacturing a current collector foil with a resin film according to any one of <1> to <6>,
   in which the metal foil is a copper foil or an aluminum foil.

According to one embodiment of the present disclosure, it is possible to provide a method of manufacturing a current collector foil with a resin film, from which a current collector foil with a resin film in which a metal foil can be bonded to a resin film at a predetermined position with high accuracy and the occurrence of wrinkles is suppressed is obtained.

### BRIEF DESCRIPTION OF THE DRAWINGS

Fig. 1A is a schematic diagram illustrating cutting of a metal foil in a step A.
Fig. 1B is a schematic diagram illustrating cutting of the metal foil in the step A.
Fig. 1C is a schematic diagram illustrating cutting of the metal foil in the step A.
Fig. 1D is a diagram showing an example of a movable stage on which the cut metal foil is held by suction.
Fig. 2 is a top view illustrating an example of the metal foil cut into a shape of a current collector foil.
Fig. 3A is a schematic diagram illustrating the suction-holding of the metal foil on the movable stage and the movement of the metal foil in a step B.
Fig. 3B is a schematic cross-sectional view showing a movable stage of an embodiment.
Fig. 3C is a schematic cross-sectional view showing a movable stage of another embodiment.
Figs. 4A, 4B, 4C, and 4D are process diagrams illustrating an example of an aspect in which a metal foil and a resin film are heat fusion-welded to each other.
(A), (B), and (C) of Fig. 5 are schematic diagrams illustrating one embodiment of a method of manufacturing a current collector foil with a resin film.
Fig. 6 is a diagram showing an example of a current collector foil with a resin film.
Fig. 7 is a diagram illustrating distances a, b, and c.

### DESCRIPTION OF THE PREFERRED EMBODIMENTS

Hereinafter, embodiments of the present disclosure will be described with reference to the drawings. The present disclosure is not limited to the following embodiments at all, and may be implemented with appropriate modifications within the scope of the object of the present disclosure. Components denoted by the same reference numeral in each drawing mean the same component. The description of components and reference numerals repeatedly shown in the respective drawings may be omitted. Dimensional ratios in the drawings do not necessarily represent actual dimensional ratios.

In a case where an embodiment is described in the present disclosure with reference to the accompanying drawings, the configuration of the embodiment is not limited to the configuration shown in the drawings. Further, the sizes of members in each drawing are conceptual, and relative relationships between the sizes of the members are not limited thereto.

In the present disclosure, a numerical range represented using "to" means a range that includes numerical values written in the front and rear of "to" as a lower limit and an upper limit. With regard to numerical ranges described stepwise in the present disclosure, an upper limit or a lower limit described in a certain numerical range may be replaced with an upper limit or a lower limit of another numerical range described stepwise. Further, with regard to the numerical ranges described in the present disclosure, an upper limit or a lower limit disclosed in a certain numerical range may be replaced with values shown in Examples.

In the present disclosure, a term "step" includes not only an independent step but also a step in a case where the intended purpose of the step is achieved even though the step cannot be clearly distinguished from another step.

### [Method of manufacturing current collector foil with resin film]

A method of manufacturing a current collector foil with a resin film according to an embodiment of the present disclosure (hereinafter, also simply referred to as a "manufacturing method according to an embodiment of the present disclosure") includes a step A of cutting a metal foil for a current collector foil into sheets, a step B of allowing a movable stage to hold the cut metal foil for each sheet by suction and allowing the movable stage to move the metal foil held by suction onto a resin film, and a step C of bringing the resin film into contact with the metal foil to heat fusion-weld the resin film to the metal foil, in which the movable stage includes a plate-like body including a heating-suction region, and an area of the heating-suction region is smaller than an area of the cut metal foil.

According to the manufacturing method of the embodiment of the present disclosure, the current collector foil with a resin film, in which metal foils can be bonded to the resin film at predetermined positions with high accuracy and the occurrence of wrinkles is suppressed is obtained.

The reason why the above-described effect is obtained is not clear, but is presumed to be as follows.

In the manufacturing method according to the embodiment of the present disclosure, the metal foil for a current collector foil is cut into sheets in the step A, and the movable stage holds the cut metal foil for each sheet by suction and moves the metal foil held by suction onto the resin film in the step B. Since the cut metal foil can be moved onto the resin film without being laminated in the manufacturing method according to the embodiment of the present disclosure as described above, the metal foils cannot stick to each other. Further, in the manufacturing method according to the embodiment of the present disclosure, the movable stage used in the step B includes the plate-like body including the heating-suction region, and the heating-suction region heats the metal foil when the movable stage moves the metal foil onto the resin film. Accordingly, the resin film and the metal foil can be quickly heat fusion-welded to each other in the step C. For this reason, it is presumed that the resin film is not excessively heated and the occurrence of wrinkles is effectively suppressed. Furthermore, the area of the heating-suction region of the movable stage used in the step B is set to be smaller than the area of the cut metal foil, so that a region in which the metal foil and the resin film are not heat fusion-welded to each other can be formed at a predetermined position on the metal foil.

On the other hand, JP2021-530829A describes that, in some embodiments, a current collector can be disposed on an electrical insulating material (for example, a laminated pouch material) such that the current collector is in direct contact with the insulating material. JP2018-524759A describes that a plurality of current collectors are disposed on a pouch film (for example, a PE/PP film) in an anode assembly or a cathode assembly. However, neither JP2021-530829A nor JP2018-524759A describes steps corresponding to the step A, the step B, and the step C included in the manufacturing method according to the embodiment of the present disclosure.

Further, a bonding table including suction holes used in a method described in JP1996-224785A (JP-H08-224785A) is a member different from the movable stage according to the embodiment of the present disclosure. In the first place, the method described in JP1996-224785A (JP-H08-224785A) is a method of bonding a film lens sheet, such as a Fresnel lens or a lenticular lens, and heat fusion-welding a metal foil to a resin film is not assumed in the method described in this document.

The current collector foil with a resin film obtained from the manufacturing method according to the embodiment of the present disclosure also has a secondary effect of providing excellent adhesiveness between the metal foil and the resin film. The excellent adhesiveness between the metal foil and the resin film tends to improve the reliability of a battery to which the current collector foil with a resin film is applied. That is, for example, in a case where a quasi-solid state battery is to be manufactured, a composition containing a positive electrode active material or a negative electrode active material and a conductive auxiliary agent is applied to a surface of a current collector foil to form a positive electrode or a negative electrode. Therefore, excellent adhesiveness between a metal foil as the current collector foil and the resin film is preferable since strengthening a base for forming a positive electrode or a negative electrode.

Hereinafter, a manufacturing method according to an embodiment of the present disclosure will be described with reference to the drawings as appropriate.

### (Step A)

The manufacturing method according to the embodiment of the present disclosure includes a step A of cutting a metal foil for a current collector foil into sheets.

The cutting may be performed using a cutter. It is preferable that the metal foil to be cut is a belt-like metal foil. The belt-like metal foil can be used as a roll body.

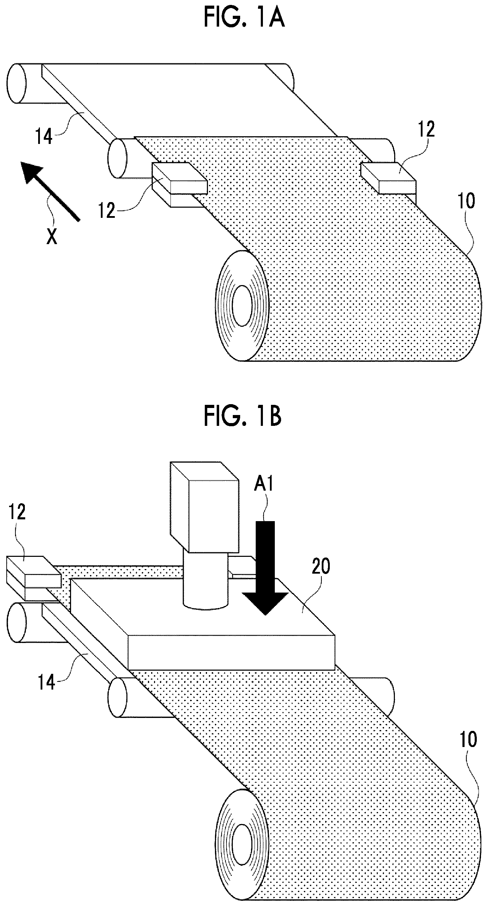

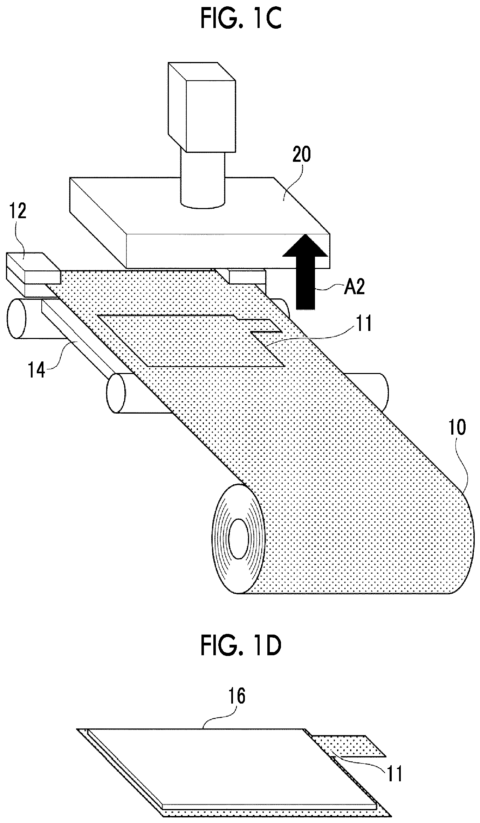

Figs. 1A, 1B, and 1C are schematic diagrams illustrating an embodiment of the step A.

As shown in Fig. 1A, in the step A, first, a belt-like metal foil 10 is drawn out from a roll body of the metal foil 10 by a desired length in a direction of an arrow X.

As shown in Fig. 1B, the metal foil 10 is drawn onto a cutting stage 14 to cover the cutting stage 14 and is fixed on the cutting stage 14 by gripping parts 12.

Next, as shown in Fig. 1B, a cutting member 20 disposed at a position facing a surface of the cutting stage 14 is moved in a direction of an arrow A1 to cut the metal foil 10 into a target shape of a current collector foil. Accordingly, a cut sheet-like metal foil (current collector foil) having a target shape is obtained. The cutting member 20 comprises a cutter (not shown).

A protective member, such as a cutter mat, may be disposed on a surface of the cutting stage 14 with which the cutter of the cutting member 20 comes into contact.

Next, as shown in Fig. 1C, the cutting member 20 is moved in a direction of an arrow A2, so that the cutting member 20 is separated from the cutting stage 14. The movable stage (not shown) moved to a position above the cutting stage 14 holds the cut metal foil 11 by suction, and separates the cut metal foil 11 from the cutting stage 14.

It is preferable that the metal foil is cut on the cutting stage as in the above-described embodiment. The cutting stage may be a plate-shaped member that is attachably and detachably provided with the movable stage. The cutting stage may be, for example, a plate-shaped member having a flat surface as shown in Fig. 1A or may be a flat plate member including a through-portion corresponding to the cut shape of the current collector foil.

In a case where the cutting stage is a plate-shaped member having a flat surface as shown in Fig. 1A, the movable stage disposed above the cutting stage in a vertical direction may be moved downward in the vertical direction to hold the cut metal foil by suction. Fig. 1D is a schematic diagram showing an example of the movable stage on which the metal foil of the present embodiment is held by suction, and the metal foil 11 is held on the lower portion of the movable stage 16 in the vertical direction by suction.

Further, in a case where the cutting stage is a flat plate member including a through-portion corresponding to the cut shape of the current collector foil, the movable stage may be disposed below the through-portion and hold the metal foil, which has been cut and passed through the through-portion, by suction. Matters relating to the suction-holding of the metal foil will be described in detail in the description of the step B.

The cutter of the cutting member may be any cutter as long as the cutter can cut the metal foil to be cut into a predetermined shape, and examples of the cutter include a Thomson blade, a carving blade, and a laser cutter.

A pressing force required to cut the metal foil may be a pressing force that can cut the metal foil to be cut. The pressing force can be set in a range of, for example, 50 kgf (0.5 kN) to 10000 kgf (100 kN), and is preferably set in a range of 100 kgf (1 kN) to 1000 kgf (10 kN).

Examples of a pressing mechanism that can be applied to the cutting of the metal foil include a servo press, an air cylinder, and a servo press.

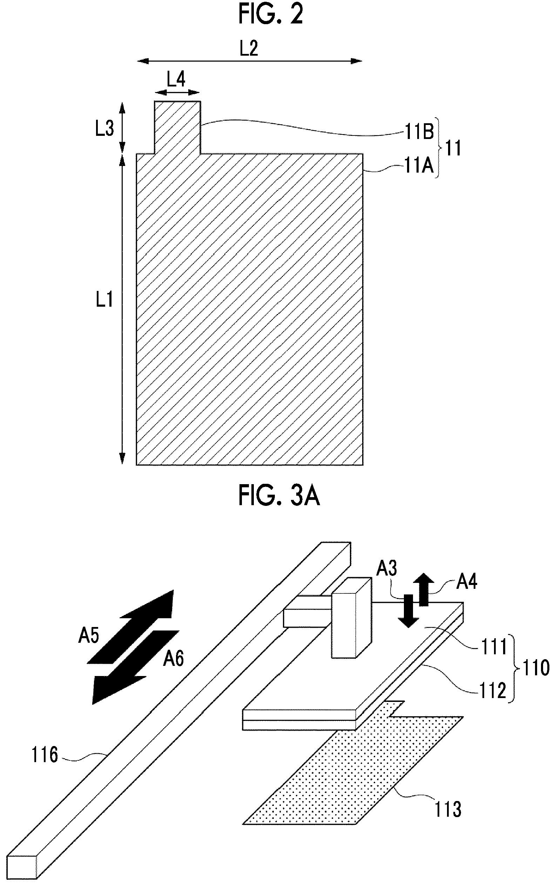

The cut shape of the metal foil may be set to a target shape of the current collector foil. It is preferable that the cut shape of the metal foil is, for example, a rectangular shape corresponding to a current collector foil including a tab portion protruding from a body portion. Fig. 2 is a top view showing an example of the metal foil forming a current collector foil portion of the current collector foil with a resin film obtained from the manufacturing method according to the embodiment of the present disclosure.

In the example shown in Fig. 2, the metal foil 11 is an example of a cut object that is cut from the belt-like metal foil 10 to be cut, and reference numeral 11A and reference numeral 11B denote portions corresponding to the body portion and the tab portion of the current collector foil, respectively. In the example shown in Fig. 2, the dimensions of the metal foil 11 can be set depending on the target dimensions of the current collector foil.

In the example shown in Fig. 2, for example, length L1 of 100 mm to 2000 mm × width L2 of 100 mm to 2000 mm and length L3 of 15 mm to 50 mm × width L4 of 20 mm to 50 mm can be set as the dimensions of the metal foil 11. Further, the position of reference numeral 11B corresponding to the tab portion is not limited to a form shown in Fig. 2 as long as being a position where a function as the tab portion can be exhibited.

The thickness of the metal foil (that is, the current collector foil obtained from cutting) is preferably 3 µm or more, more preferably 5 µm or more, and still more preferably 10 µm or more.

From the viewpoint of flexibility and lightness, the thickness of the metal foil is preferably 100 µm or less, more preferably 70 µm or less, and still more preferably 50 µm or less.

The metal foil can be a metal foil containing a metal material publicly known in the related art that is used for a current collector foil. Examples of the metal material include aluminum, an aluminum alloy, copper, a copper alloy, stainless steel, nickel, and titanium. The kind of the metal material may be selected depending on whether the current collector foil is a current collector foil for a positive electrode or a current collector foil for a negative electrode.

In a certain aspect, a copper foil or an aluminum foil can be suitably used as the metal foil. A current collector foil to which a copper foil or an aluminum foil is applied may have poor adhesiveness to a resin material, but the current collector foil with a resin film obtained from the manufacturing method according to the embodiment of the present disclosure is excellent in adhesiveness between the resin film and the current collector foil even in a case where a copper foil or an aluminum foil is used.

### (Step B)

The manufacturing method according to the embodiment of the present disclosure includes a step B of allowing the movable stage to hold the cut metal foil for each sheet by suction and allowing the movable stage to move the metal foil held by suction onto the resin film. In the step B, the movable stage moves the metal foil held by suction onto the resin film while heating a predetermined region of the metal foil held by suction.

The movable stage includes a plate-like body including a heating-suction region.

The heating-suction region is a region that comprises both a suction mechanism and a heating mechanism. When moving the metal foil onto the resin film in the step B, the heating-suction region holds the metal foil on the surface of the movable stage by suction and heats the metal foil.

In the step B, a portion of the metal foil, which is in contact with the heating-suction region, is heated to a temperature at which heat fusion-welding between the metal foil and the resin film can be performed. Since only the metal foil is heated in the step B, the thermal deformation of the resin film caused by overheating is effectively suppressed in a step C.

The area of the heating-suction region is smaller than the area of a cut metal foil piece. For this reason, in a case where the metal foil is heated, the temperature of a portion of the metal foil that is not in contact with the heating-suction region can be made lower than the temperature of the portion of the metal foil that is in contact with the heating-suction region. In a case where the temperature of the portion of the metal foil that is not in contact with the heating-suction region is adjusted to a temperature at which the metal foil and the resin film are not heat fusion-welded to each other, a region in which the metal foil and the resin film are not heat fusion-welded to each other can be formed between the metal foil and the resin film in the step C.

An aspect in which the movable stage holds the metal foil by suction is not particularly limited as long as the metal foil can be held on the movable stage.

In a certain aspect, in a case where the metal foil is cut on the movable stage, the suction mechanism of the heating-suction region is operated from below the cut metal foil in the vertical direction to hold the metal foil on the movable stage by suction.

Further, in a certain aspect, the movable stage is moved to a position above the cutting stage, on which the cut metal foil is placed, in the vertical direction such that the heating-suction region of the movable stage faces the metal foil, and aligns the heating-suction region with a portion of the metal foil to be heated. Next, the suction mechanism included in the heating-suction region is operated to allow the movable stage to hold the metal foil by suction, and the movable stage is then moved in a predetermined direction. Fig. 3A is a schematic diagram illustrating an example of the present aspect.

As shown in Fig. 3A, a movable stage 110 including a heating mechanism 111 and a suction mechanism 112 is attached to a moving mechanism 116, and the movable stage 110 is moved to a position corresponding to a cut metal foil 113 by the moving mechanism 116. Next, the movable stage 110 is moved down in an A3 direction, and the suction mechanism 112 is operated to hold the metal foil 113 on the surface of the movable stage 110, which corresponds to the suction mechanism 112, by suction. Then, the movable stage 110, which holds the metal foil 113 by suction, is moved up in an A4 direction and is moved in an A5 direction by the moving mechanism 116 to transfer the metal foil 113 onto a resin film (not shown). After that, in the step C to be described later, after the metal foil 113 and the resin film are heat fusion-welded to each other, the movable stage 110 is moved in an A6 direction and returns to a position above the cutting stage.

The suction mechanism included in the heating-suction region is not particularly limited as long as being a mechanism having a function to hold the metal foil, which is cut in the step A, on the surface of the movable stage by suction. The suction mechanism may include, for example, a plurality of suction holes that are provided on the surface of the movable stage and an intake member (for example, an intake pipe) that is connected to the movable stage and a vacuum pump. In a case where internal air of the suction holes provided on the surface of the movable stage is sucked from the intake member and the inside of the holes is brought into a decompression state, the holding property of the metal foil on the surface of the stage can be improved.

The suction mechanism may be a mechanism that releases the holding of the metal foil at a time when suction from the intake member is stopped, or may be a mechanism that maintains a decompression state inside the suction holes provided on the surface of the stage to maintain the holding of the metal foil for a certain period of time.

In a case where the movable stage is a plate-like body including a plurality of suction holes, the shape of an opening portion of the suction hole is not particularly limited but is preferably a circular shape or an elliptical shape.

The number of the suction holes may be set to the number of suction holes that allows the metal foil to be held on the surface of the movable stage by suction. The number of suction holes present per 1 cm² is in a range of, for example, 1 to 10000 pieces.

An opening diameter of the suction hole can be set in a range of, for example, 10 µm to 2000 µm. The opening diameter means a diameter of an opening portion in a case where the shape of the opening portion of the suction hole is a perfectly circular shape, and means an average value of a maximum value and a minimum value of an inner diameter of the opening portion in a case where the shape of the opening portion of the suction hole is not a perfectly circular shape.

In a certain aspect, it is preferable that the plate-like body, which includes the heating-suction region and is included in the movable stage, includes a plurality of the suction holes and the thickness of the metal foil and an average opening diameter of the suction holes satisfy a relationship shown in Expression 2. 0.005 ≤ [thickness of metal foil] ÷ [average opening diameter of suction holes] ≤ 0.1

In a case where a value obtained by dividing the thickness of the metal foil by the average opening diameter of the suction holes is 0.005 or more, suction hole marks are less likely to be attached to the metal foil. For this reason, adhesiveness between the metal foil and the resin film is further improved in a case where heat fusion-welding is performed. Further, in a case where a value obtained by dividing the thickness of the metal foil by the average opening diameter of the suction holes is 0.1 or less, the cut current collector foil can be transferred without misregistration in a case where the cut current collector foil is moved onto the resin film.

In the present disclosure, the "thickness of the metal foil" is a value measured in accordance with Japanese Industrial Standards JIS K7130: 1999.

In the present disclosure, the "average opening diameter of the suction holes" is a value measured by the following method.

The surface of the plate-like body including the plurality of suction holes is observed with an electron microscope, and 20 suction holes are randomly selected. The opening diameters of the selected 20 suction holes are measured, and measured values are arithmetically averaged to calculate the "average opening diameter".

The heating mechanism of the heating-suction region is not particularly limited as long as being a mechanism having a function to heat the metal foil. Examples of the heating mechanism include resistance heating, arc heating, induction heating, dielectric heating, infrared heating, laser heating, and heat pump heating. From the viewpoint of the lightness of an apparatus, resistance heating or induction heating is preferable as the heating mechanism.

It is preferable that the heating mechanism is being operated when the heating-suction region of the movable stage holds the metal foil by suction. The heating mechanism can also be operated after the movable stage holds the metal foil by suction.

A heating temperature may be set according to the metal foil and the resin film.

The heating temperature may be a temperature at which heat fusion-welding between the metal foil and the resin film can be performed in the step C, and can be set in a range of, for example, 50°C to 300°C, is preferably in a range of 60°C to 200°C, and is more preferably in a range of 70°C to 100°C.

A time for which the metal foil is heated may be a time for which the movable stage moves the cut metal foil onto the resin film, and can be set in a range of, for example, 0.1 seconds to 60 seconds, is preferably in a range of 1 second to 30 seconds, and is more preferably in a range of 2 seconds to 15 seconds.

The movable stage may be moved by a moving mechanism.

The moving mechanism is not particularly limited, and examples thereof include a single-axis robot, an air cylinder, and a conveyor.

A material forming the movable stage is not particularly limited, and examples thereof include aluminum, stainless steel, and Bakelite.

The thickness of the movable stage is not particularly limited, and can be set in a range of, for example, 1 mm to 50 mm from the viewpoint of transportability.

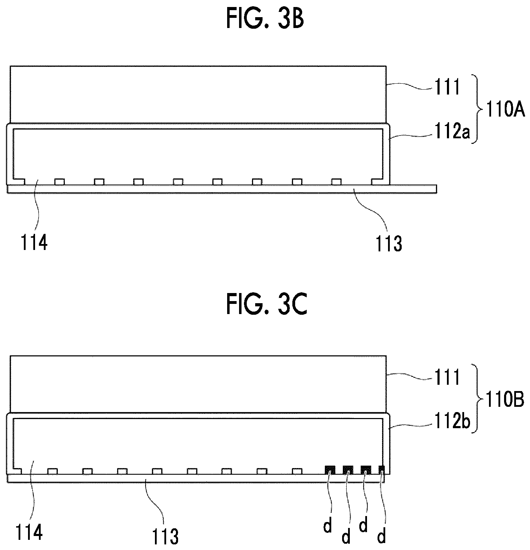

Fig. 3B is a schematic cross-sectional view showing an embodiment of the movable stage and a form in which the movable stage holds a metal foil by suction. As shown in Fig. 3B, a heating mechanism 111 and a suction mechanism 112a are integrally stacked to form one movable stage 110A. A surface of the suction mechanism 112a opposite to the heating mechanism 111 is provided with a plurality of suction holes 114. In the movable stage 110A, the entire surface of the suction mechanism 112a opposite to the heating mechanism 111 is a heating-suction region.

In a case where the movable stage 110A is used, a portion (that is, a tab portion of the current collector foil) of the cut metal foil 113 where heating is desired to be suppressed is positioned outside a surface of the suction mechanism 112a.

Fig. 3C is a schematic cross-sectional view showing another embodiment of the movable stage and a form in which the movable stage holds a metal foil by suction. As shown in Fig. 3C, a heating mechanism 111 and a suction mechanism 112b are integrally stacked to form one movable stage 110B. A surface of the suction mechanism 112b opposite to the heating mechanism 111 is provided with a plurality of suction holes 114. Further, a part of the surface of the suction mechanism 112b opposite to the heating mechanism 111 is made of a heat insulating material d.

For example, expanded polystyrene, urethane foam, silicone, or the like can be applied as the heat insulating material.

In the movable stage 110B, a portion of the surface of the suction mechanism 112b opposite to the heating mechanism 111, which is not made of the heat insulating material d, is a heating-suction region.

In a case where the movable stage 110B is used, a portion (that is, a tab portion of the current collector foil) of the cut metal foil 113 where heating is desired to be suppressed is positioned in a region made of the heat insulating material d on a surface of the suction mechanism 112b.

### (Step C)

The manufacturing method according to the embodiment of the present disclosure includes a step C of bringing the resin film into contact with the metal foil to heat fusion-weld the resin film to the metal foil.

In the step B, a portion of the metal foil, which is in contact with the heating-suction region, is heated to a temperature at which the metal foil and the resin film can be heat fusion-welded to each other. For this reason, in a case where the metal foil and the resin film are brought into contact with each other in the step C, the metal foil is rapidly heat fusion-welded to the resin film and the thermal deformation of the resin film caused by overheating is suppressed. As a result, the occurrence of wrinkles is suppressed.

The resin film is a film containing a plastic substrate, and is preferably a laminated film including a heat fusion-welded layer and a plastic substrate. The resin film may be formed of only the plastic substrate.

In the present disclosure, the plastic substrate means a substrate which contains a thermoplastic resin as a main component and of which a glass transition temperature (Tg) is 100°C or higher.

In the present disclosure, the heat fusion-welded layer means a layer which contains a thermoplastic resin as a main component and of which a glass transition temperature (Tg) is 50°C or higher. The heat fusion-welded layer is configured as a layer of which a glass transition temperature (Tg) is lower than that of the plastic substrate.

The glass transition temperature (Tg) can be measured using a differential scanning calorimeter.

Further, the main component of the plastic substrate or the heat fusion-welded layer refers to a component having the highest content (% by mass) among components contained in the plastic substrate or the heat fusion-welded layer.

Examples of the thermoplastic resin contained in the plastic substrate include at least one selected from polyethylene terephthalate, triacetyl cellulose, an acrylic resin, polycarbonate, polyethylene, or polyimide; polyethylene terephthalate or polyethylene is preferable; and polyethylene terephthalate is more preferable.

Examples of the thermoplastic resin contained in the heat fusion-welded layer include general materials used for heat sealing; polyethylene, polypropylene, ethylene-vinyl acetate, ionomer, an ethylene vinyl acetate resin (EVA), and an ethylene-methyl methacrylate copolymer resin (EMMA) are preferable; and at least one selected from ethylene vinyl acetate resin (EVA) or ethylene-methyl methacrylate copolymer resin (EMMA) is more preferable.

The plastic substrate and the heat fusion-welded layer may contain a desired additive (an epoxy resin, nylon, or the like) in addition to the thermoplastic resin.

A content of the thermoplastic resin to a total mass of the heat fusion-welded layer is not particularly limited, and may be 50% by mass or more, 70% by mass or more, 90% by mass or more, or 100% by mass.

It is preferable that the resin film is an elongated belt-like resin film.

From the viewpoint of suppressing the occurrence of wrinkles, the thickness of the resin film is preferably 4 µm or more, more preferably in a range of 4 µm to 50 µm, and still more preferably in a range of 4 µm to 20 µm. An upper limit of the thickness of the resin film is not particularly limited, but is, for example, 1 mm from the viewpoint of ease of winding the current collector foil with a resin film.

In a case where the resin film is formed of only the plastic substrate, the thickness of the resin film is the thickness of the plastic substrate. In a case where the resin film is formed of the plastic substrate and the heat fusion-welded layer, the thickness of the resin film is the sum of the thickness of the plastic substrate and the thickness of the heat fusion-welded layer.

In a certain aspect, it is preferable that the resin film includes the heat fusion-welded layer and the plastic substrate and the thickness of the heat fusion-welded layer and the thickness of the plastic substrate satisfy a relationship shown in Expression 1. 0.1 ≤ [thickness of heat fusion-welded layer] ÷ [thickness of plastic substrate] ≤ 1.00

In a case where a value obtained by dividing the thickness of the heat fusion-welded layer by the thickness of the plastic substrate satisfies the range of Expression 1, the energy density of the battery in which the current collector foil with a resin film is incorporated is more excellent.

It is more preferable that the thickness of the heat fusion-welded layer and the thickness of the plastic substrate satisfy a relationship shown in Expression 1A. 0.25 < [thickness of heat fusion-welded layer] ÷ [thickness of plastic substrate] < 2.00

In the present disclosure, the thicknesses of the heat fusion-welded layer and the plastic substrate are values measured by the following method.

The resin film is cut in a thickness direction using any cutting unit (for example, a microtome). A cross section is magnified with a laser microscope, and the thickness of each of the heat fusion-welded layer and the plastic substrate is measured. The measurement is performed at 10 points, and the thickness of the heat fusion-welded layer or the plastic substrate is an arithmetic average value of values measured at the 10 points.

For heat fusion-welding between the metal foil and the resin film, the resin film may be brought into contact with the metal foil and a contact portion between the metal foil and the resin film may be pressed as necessary.

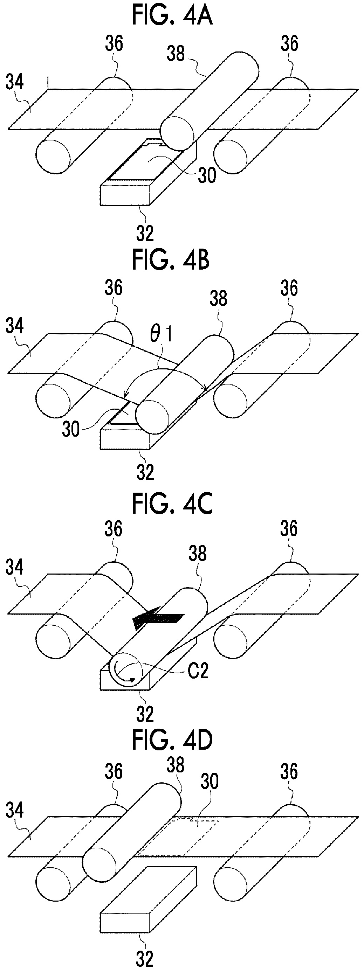

In a certain aspect, from the viewpoint of suppressing the occurrence of wrinkles, it is preferable that the metal foil and the resin film wrapped around a roller are brought into contact with each other and the roller and the movable stage are moved relative to each other to heat fusion-weld the resin film to the metal foil. Hereinafter, the heat fusion-welding between the metal foil and the resin film according to the present aspect will be described with reference to Figs. 4A, 4B, 4C, and 4D as appropriate.

From the viewpoint of suppressing the occurrence of wrinkles, a time during which the metal foil and the resin film are in contact with each other is preferably in a range of 1 second to 10 seconds and more preferably in a range of 2 seconds to 5 seconds.

Figs. 4A, 4B, 4C, and 4D are process diagrams showing an example of a step of bringing the resin film, which is wrapped around the roller, into contact with the metal foil and moving the roller and the movable stage relative to each other to heat fusion-weld the resin film to the metal foil.

As shown in Fig. 4A, a movable stage 32 on which a metal foil 30 is held by suction in the step B stops at a predetermined position facing a resin film 34. The resin film 34 is supported by two rollers 36. Reference numeral 38 denotes a clutch roller.

A predetermined region of the metal foil 30 is heated by a heating-suction region (not shown) of the movable stage 32. The suction-holding of the metal foil 30 performed by the movable stage 32 is released after the movable stage 32 arrives at a predetermined position on the resin film 34 and before heat fusion-welding treatment is started.

Next, as shown in Fig. 4B, the clutch roller 38 is moved in a direction toward the metal foil 30 to be wrapped with the resin film 34 at an angle (wrap angle) denoted by θ1, and brings the resin film 34 into contact with the metal foil 30. The angle θ1 can be set to satisfy "90° ≤ θ1 < 180°". The angle θ1 may be 90°. It is preferable that a distance between the movable stage 32 and the resin film 34 is set such that the angle θ1 is in the above-described range.

Next, as shown in Fig. 4C, the clutch roller 38 is moved in a direction of an arrow C1 while being rotated in a direction of an arrow C2, so that the clutch roller 38 is separated from the movable stage 32. Accordingly, the metal foil 30 and the resin film 34 are heat fusion-welded and bonded to each other in a part of a region surrounded by a one-dot chain line in Fig. 4D.

### (Step D)

Since the area of the heating-suction region of the movable stage used in the manufacturing method according to the embodiment of the present disclosure is smaller than the area of the cut metal foil, a region in which the metal foil and the resin film are not heat fusion-welded to each other is formed at a part of the metal foil in the step C.

Since a region of the metal foil that is not heat fusion-welded to the resin film functions as a tab portion from which an electrical wire is led out in the current collector foil with a resin film, the bending of the metal foil that is not heat fusion-welded to the resin film tends to significantly impair the product value of the current collector foil with a resin film.

From such a viewpoint, it is preferable that the manufacturing method according to the embodiment of the present disclosure includes a step D of pressing a region of the metal foil, which is not heat fusion-welded to the resin film, against the resin film to flatten the region of the metal foil after the step C. In a case where the step D is performed, the occurrence of the bending of the metal foil in a region that is not heat fusion-welded to the resin film can be effectively suppressed.

In an aspect in which a region of the metal foil, which is not heat fusion-welded to the resin film, is pressed against the resin film to be flattened, a pressing member such as a roller may be used or a winding pressure generated in a case where the current collector foil with a resin film is wound into a roll body may be used.

In a case where the metal foil is pressed using the winding pressure, it is preferable that the current collector foil with a resin film is wound such that the metal foil heat fusion-welded and bonded to the resin film is positioned on the outer side of the roll body in a circumferential direction.

### [Other steps]

The manufacturing method according to the embodiment of the present disclosure may include other steps in addition to the step A, the step B, the step C, and the step D. Examples of the other steps include a step of perforating the resin film and a step of giving a shape to the current collector foil, which is heat fusion-welded to the resin film, using a laser.

In the manufacturing method according to the embodiment of the present disclosure, it is preferable that an elongated belt-like resin film is used as the resin film, and a series of steps consisting of arbitrary steps, such as the step A, the step B, the step C, the step D, are repeatedly and continuously performed. In a case where the above-described series of steps are continuously repeated, it is possible to manufacture a current collector foil with a resin film in which a plurality of metal foils are bonded onto the resin film at regular intervals.

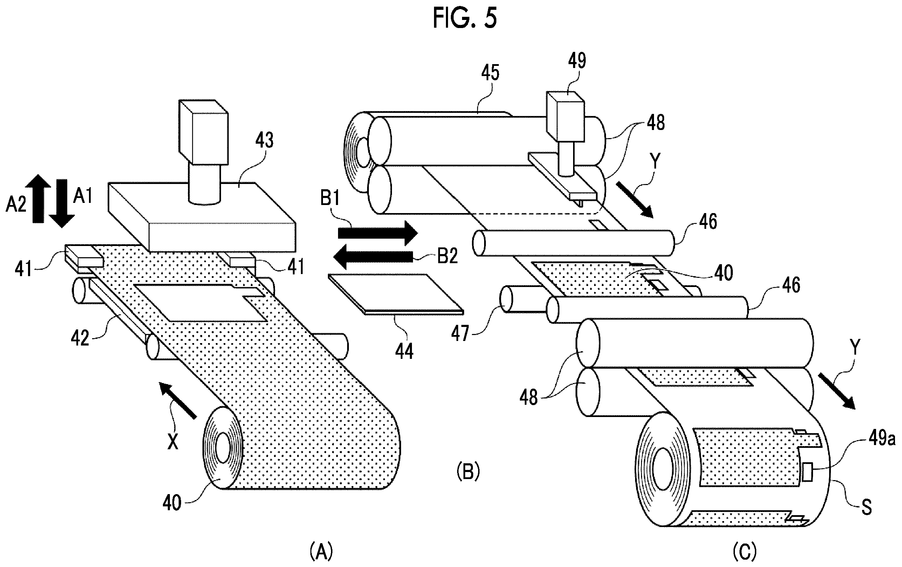

(A), (B), and (C) of Fig. 5 are schematic diagrams showing an example of a configuration of a manufacturing apparatus that performs a series of steps consisting of the step A, the step B, the step C, and the step D of the manufacturing method according to the embodiment of the present disclosure.

The manufacturing apparatus of the example shown in Fig. 5 includes a cutting unit (A), a moving unit (B), and a bonding unit (C).

As shown in (A), (B), and (C) of Fig. 5, in the cutting unit (A), a metal foil 40 is drawn out from a roll body of the metal foil 40 in an X direction to cover a cutting stage 42 and is then fixed on the cutting stage 42 by fixing members such as gripping parts 41. Next, a cutting member 43 is moved in an A1 direction to cut the metal foil 40 into a predetermined shape. (Step A)

Then, a movable stage 44 holds the cut metal foil 40 by suction, and the moving unit (B) heats the metal foil 40 while moving the metal foil 40 onto a resin film 45. The suction-holding and heating of the metal foil 40 to be performed by the movable stage 44 are performed in a heating-suction region (not shown). In this example, the cutting member 43 is moved in an A2 direction and the movable stage 44 then holds the cut metal foil 40 by suction on the lower side in (B) of Fig. 5.

In the bonding unit (C), the resin film 45 is continuously transported from a roll body of the resin film 45 in a Y direction by a pair of transport rollers 48.

After the moving unit (B) is moved in a B1 direction and the metal foil 10 is moved to a predetermined position above the resin film 45, which is continuously transported, in (C) of Fig. 5 in the bonding unit (C), the movable stage 44 on which the cut metal foil 40 is held by suction releases the suction-holding of the metal foil 40. After that, a clutch roller 47 is wrapped with the resin film 45 and brings the resin film 45, which is supported by two rollers 46, into contact with the metal foil 10 from the lower side in (C) of Fig. 5, and the resin film 45 and the metal foil 40 are heat fusion-welded to each other. As a result, a current collector foil S with a resin film is obtained. After the resin film 45 and the metal foil 40 are heat fusion-welded to each other, the movable stage 44 is moved in a B2 direction. The current collector foil S with a resin film is transported to a downstream side in the Y direction to form a roll body wound such that the metal foil 40 faces outward in the circumferential direction.

### (Step B and Step C)

Meanwhile, as another aspect of the bonding unit (C), a configuration may be adopted in which two rollers 46 support the resin film 45 from the lower side in the drawing as in the steps shown in Figs. 4A to 4D, the movable stage 44 moves the metal foil 10 to a predetermined position above the resin film 45 in the drawing, and the clutch roller 47 is wrapped with the resin film 45 from the upper side in the drawing and brings the resin film 45 into contact with the metal foil 10 to heat fusion-weld the resin film 45 and the metal foil 40.

In the present example, in the bonding unit (C), the resin film 45 and the metal foil 40 are heat fusion-welded to each other and a portion of the metal foil 40 that is not heat fusion-welded to the resin film is then pressed and flattened by pressing that is performed by a pair of transport rollers 48 disposed on the downstream side in the Y direction and a winding pressure that is generated in a case where the current collector foil S with a resin film is wound as a roll body. (Step D)

In the example shown in (A), (B), and (C) of Fig. 5, in a case where the current collector foil S with a resin film is used, a punching member 49 is disposed on the upstream side in the Y direction to form an opening portion 49a through which a tab portion of the other current collector foil is to be drawn out.

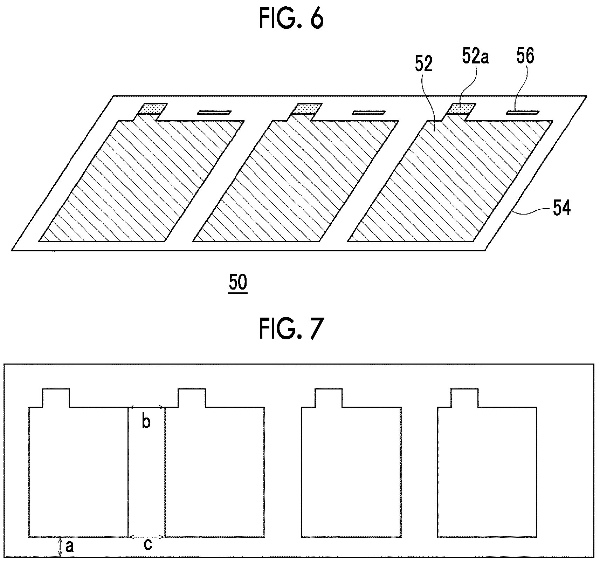

Fig. 6 shows an example of the current collector foil with a resin film obtained from the manufacturing method according to the embodiment shown in (A), (B), and (C) of Fig. 5.

Fig. 6 shows an example in which the current collector foil with a resin film is cut into a current collector foil with a resin film in which three metal foils are arranged at regular intervals on the resin film, but it is needless to say that the current collector foil with a resin film according to an embodiment of the present disclosure is not limited to this example.

As shown in Fig. 6, in a current collector foil 50 with a resin film, three metal foils 52 are bonded to the resin film 54 at regular intervals. A portion denoted by reference numeral 52a indicates a portion of the metal foil 50 that is not heat fusion-welded to the resin film 54 (that is, the metal foil that is not heat fusion-welded to the resin film). An opening portion 56 for pulling out a tab portion of another current collector foil is formed in the current collector foil 50 with a resin film.

### Examples

Hereinafter, the above-described embodiment will be specifically described with reference to Examples, but the above-described embodiment is not limited to Examples.

### <Metal foil>

An aluminum foil was prepared as a metal foil.

Table 1 shows a thickness M (µm) of a metal foil used in each of Examples and Comparative Example. The thickness was measured by the above-described measurement method.

### <Resin film>

A roll body of an elongated film (width: 270 mm) consisting of two layers, that is, the following plastic substrate and a heat fusion-welded layer was prepared as a resin film.
Plastic substrate: polyethylene terephthalate substrate
Heat fusion-welded layer: ethylene-methyl methacrylate copolymer resin (EMMA) layer

With regard to the resin film used in each of Examples and Comparative Example, a thickness A (unit: µm) of the plastic substrate, a thickness B (unit: µm) of the heat fusion-welded layer, and a total thickness C (A + B, unit: µm) of the resin film are shown in Table 1. The thickness was measured by the above-described measurement method.

### <Movable stage>

A movable stage (dimensions: length 203 mm × width 147 mm × thickness 30 mm) including a plate-like body including suction holes was prepared as a movable stage. The plate-like body including the suction holes had a thickness of 15 mm and was made of aluminum.

A movable stage includes a heating-suction region on one surface thereof was used. The heating-suction region is provided with a suction mechanism that consists of a plurality of suction holes and an intake pipe connected to a stage and a vacuum pump, and a heating mechanism that uses a resistance heating method.

Table 1 shows an average opening diameter N (unit: mm) of the suction holes.

### [Examples 1 to 11 and Comparative Example 1]

### <Manufacturing apparatus>

A manufacturing apparatus having the same configuration as the manufacturing apparatus shown in (A), (B), and (C) of Fig. 5 was prepared. However, the following changes were made for Examples 1, 2, and 3, and Comparative Example 1. The shape of the current collector foil with a resin film had a configuration in which sheet-like current collector foils were heat fusion-welded to a resin film at regular intervals as in the current collector foil 50 with a resin film shown in Fig. 6. An interval between the adjacent current collector foils was set to 40 mm.

A metal foil forming a current collector foil portion included a body portion and a tab portion for taking out a wire, and the shape thereof was the same as the shape shown in Fig. 2. The dimensions of each portion are as follows. L1, L2, L3, and L4 correspond to reference numerals L1, L2, L3, and L4 shown in Fig. 2.

L1: 205 mm, L2: 149 mm, L3: 33 mm, L4: 30 mm.

### Example 1:

When the metal foil and the resin film were to be heat fusion-welded to each other in the step C performed by the bonding unit (C), the metal foil and the resin film were heat fusion-welded to each other without the wrapping of the clutch roller 47 with the resin film (a wrap angle θ1 = 0). In Table 1, this is written as "placed flat as it is" (the same applies hereinafter).

The step D was not performed in the bonding unit (C). That is, the metal foil and the resin film were heat fusion-welded to each other, and were then cut and overlapped without being pressed by the pair of transport rollers 48 and being wound.

### Example 2:

The step D was not performed in the bonding unit (C). That is, the metal foil and the resin film were heat fusion-welded to each other, and were then cut and overlapped without being pressed by the pair of transport rollers 47 and being wound.

### Example 3:

In the bonding unit (C), after being heat fusion-welded to each other, the metal foil and the resin film were subjected to only pressing performed by the pair of transport rollers 47 as a step D and were cut and overlapped without being wound into a roll body.

### Comparative Example 1:

The step A was not performed in the cutting unit (A). That is, a laminate in which a metal foil cut into a predetermined shape in advance was laminated was used. In the moving unit (B), the metal foil was held on the movable stage by suction from the laminate and was moved.

When the metal foil and the resin film were to be heat fusion-welded to each other in the step C performed by the bonding unit (C), the metal foil and the resin film were heat fusion-welded to each other without the wrapping of the clutch roller 47 with the resin film (a wrap angle θ1 = 0).

The step D was not performed in the bonding unit (C). That is, the metal foil and the resin film were heat fusion-welded to each other, and were then cut and overlapped without being pressed by the pair of transport rollers 47 and being wound.

### <Manufacture of current collector foil with resin film>

### (Step A)

A metal foil (aluminum foil) wound in a roll shape was fixed to the cutting stage.

A Thomson blade for punching was caused to slide by a servo press machine to cut the fixed metal foil to a desired size. In this case, a set pressure of the servo press machine was 600 kgf (5880 N).

### (Step B)

After the vacuum pump was operated to hold the cut metal foil on the movable stage by suction, the metal foil was moved to a predetermined position facing the resin film by a single-axis robot while being heated. The movement was completed in 3 seconds. A set heating temperature was 110°C.

### (Step C)

The resin film was brought into contact with the metal foil, which was moved in the step B, by the clutch roll. After that, the clutch roll was rotated at a speed of 3 m/min to heat fusion-weld and bond the resin film to the metal foil.

Ten metal foils were continuously heat fusion-welded to the resin film while an interval between the metal foils was maintained at 40 mm.

With regard to an example in which the wrap angle θ was set by the clutch roller, a value of the angle θ was shown in Table 1.

### (Step D)

A pair of rollers was disposed above and below the resin film at a position immediately after the aluminum foil and the resin film were bonded to each other in the step C. A gap between the pair of rollers was set to be equal to or less than the thickness of the resin film. A laminate of the aluminum foil and the resin film having been subjected to the step C was transported to this gap. As a result, a region of the aluminum foil that was not heat fusion-welded to the resin film was pressed by the pair of rollers.

After the step D, the current collector foil with a resin film was further transported at a speed of 1 m/min and wound into a roll body.

In this manner, the current collector foil with a resin film of each of Examples and Comparative Example was manufactured.

### [Matters relating to Expression 1]

With regard to the resin film used in each of Examples and Comparative Example, a value of [thickness A (mm) of heat fusion-welded layer] ÷ [thickness B (mm) of plastic substrate] was calculated. Results are shown in Table 1.

### [Matters relating to Expression 2]

With regard to the metal foil and the movable stage used in each of Examples and Comparative Example, a value of "[thickness M (mm) of metal foil] ÷ [average opening diameter N (mm) of suction holes]" was calculated. Results are shown in Table 1.

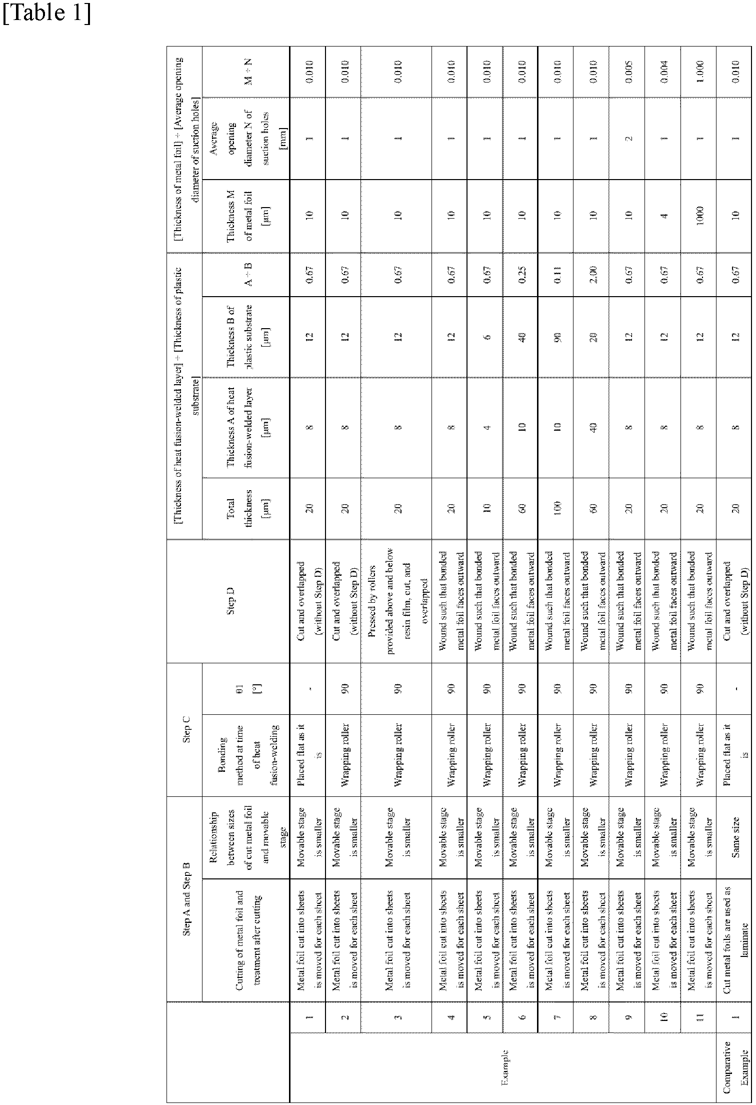

### [Evaluation]

With regard to the current collector foil with a resin film obtained in each of Examples and Comparative Example, misregistration, wire lead-out suitability, wrinkles, the bending of a portion of the metal foil that was not heat fusion-welded to the resin film, and a yield were evaluated.

In addition, energy density and adhesiveness between the metal foil and the resin film were evaluated with regard to the current collector foil with a resin film obtained in each of Examples.

Evaluation methods and evaluation standards are as follows.

A current collector foil with a resin film, in which ten metal foils were heat fusion-welded to the resin film at an interval of 40 mm and which was cut from a roll body of the current collector foil with a resin film obtained as described above, was used as an evaluation sample.

With regard to the ease of wiring and energy density, quasi-solid state batteries were produced using the current collector foils with a resin film obtained as described above and were evaluated. A method of producing the quasi-solid state battery is as follows.

### (Production of quasi-solid state battery)

### <<Preparation of composition for positive electrode>>

(1) 13.4 g of a LiPF₆ solution (electrolyte) having a molar concentration of 0.9 mol/L was mixed with a liquid mixture in which 45 g of ethylene carbonate, 10 g of propylene carbonate, and 45 g of diethyl carbonate are mixed, and then 2.3 g of vinylene carbonate (VC) was further mixed therewith to obtain an electrolytic solution X1.
(2) 2 g of a conductive auxiliary agent (Ketjen black: "CARBON ECP600JD" manufactured by LION SPECIALTY CHEMICALS CO., LTD.) and 174 g of a positive electrode active material (iron phosphate: "LFP NCO M121" manufactured by Aleees) were stirred at 1,500 revolutions per minute (rpm; the same applies hereinafter) for 30 seconds with a mixer (AWATORI RENTARO ARE-310, manufactured by THINKY Corporation) to prepare a kneaded material Y1 (176 g).
(3) The electrolytic solution X1 (64 g) was added to the kneaded material Y1 (176 g), and the mixture was stirred at 1500 rpm for 120 seconds with AWATORI RENTARO (manufactured by THINKY Corporation) to obtain a composition for a positive electrode.

### <<Preparation of composition for negative electrode>>

(1) The same electrolytic solution X1 (64 g) used for the preparation of the composition for a positive electrode was prepared.
(2) 152.5 g of a conductive auxiliary agent (carbon black: "C-NERGY SUPER C45" manufactured by Imerys Graphite & Carbon S.A.) and 6.5 g of a negative electrode active material ("MESOPHASE GRAPHITE POWDER A (MGP-A)" manufactured by China Steel Chemical Corporation) were stirred at 900 rpm for 18 seconds with AWATORI RENTARO (manufactured by THINKY Corporation) to prepare a kneaded material Z1.
(3) The electrolytic solution X1 (64 g) was added to the kneaded material Z1 (159 g), and the mixture was stirred at 900 rpm for 30 seconds with AWATORI RENTARO (manufactured by THINKY Corporation) to obtain a composition for a negative electrode.

### <<Production of quasi-solid state battery>>

Ten quasi-solid state batteries were produced using evaluation samples obtained in each of Examples and Comparative Example. A production method is as follows.

The evaluation sample was cut between the respective metal foils to prepare current collector foils to be used as a current collector foil for a positive electrode and a current collector foil for a negative electrode.

The composition for a positive electrode was applied to the surface of a body portion of the current collector foil for a positive electrode to form a positive electrode having a thickness of 600 µm.

The composition for a negative electrode was applied to the surface of a body portion of the current collector foil for a negative electrode to form a negative electrode having a thickness of 500 µm.

A polyethylene separator (thickness: 20 µm, COD-20-A manufactured by Double Scope Co., Ltd.) was prepared as a separator.

The separator was interposed between the positive electrode and the negative electrode described above, and was pressurized with a flat plate press to obtain a battery.

### (Evaluation (1): misregistration)

In each of Examples and Comparative Example, a distance a [mm] between a short side of the metal foil and an end portion of the resin film and a distance b [mm] and a distance c [mm] between vertices of the metal foils were measured with regard to ten metal foils that were heat fusion-welded to the resin film. Details of the distances a, b, and c are shown in Fig. 7.

Among the ten metal foils, the distance b [mm] and the distance c [mm] between the metal foil and one adjacent current collector foil were measured with regard to two metal foils positioned at both ends of the evaluation sample, and the distances b [mm] and the distances c [mm] between the metal foil and the two adjacent metal foils were measured with regard to the other eight metal foils.

The number of metal foils in which all the distance a, the distance b, and the distance c were in a range of 16 [mm] ± 1 [mm] and both the distance b and the distance c were in a range of 40 [mm] ± 1 [mm] was counted.

Results are shown in Table 2. The best evaluation result is "0".

### (Evaluation (2): wire lead-out suitability)

With regard to each of the produced quasi-solid state batteries (ten pieces) of Examples and Comparative Example, the number of batteries in which the respective metal foils of the current collector foil for a positive electrode and the current collector foil for a negative electrode were not exposed to the outside of the resin film (that is, a pouch) was counted. A battery in which the metal foils are not exposed to the outside of the pouch means a battery in which wiring is easy. A battery in which the metal foils are exposed to the outside of the pouch means a battery that has a wire lead-out defect.

Results are shown in Table 2. The best evaluation result is "0".

### (Evaluation (3): wrinkles)

In each of the evaluation samples of Examples and Comparative Example, the number of metal foils having one or more wrinkles having a length of 1 mm or more and a height of 0.1 mm or more was counted.

Results are shown in Table 2. The best evaluation result is "0".

### (Evaluation (4): bending of portion of metal foil not heat fusion-welded to resin film)

In each of the evaluation samples of Examples and Comparative Example, the number of metal foils of which a portion not heat fusion-welded to the resin film was bent without maintaining a rectangular shape was counted.

Results are shown in Table 2. The best evaluation result is "0".

In Table 2, "the bending of a portion of the metal foil that was not heat fusion-welded to the resin film" was described as "bending".

### (Evaluation (5): yield)

A yield of each of Examples and Comparative Example was calculated using Equation (X) based on the results of each of Evaluations (1) to (4) described above, and each of Examples and Comparative Example was evaluated according to the following evaluation standards. Results are shown in Table 2. The yield of each of Examples and Comparative

Example is shown in parentheses together with the evaluation result.

The best evaluation result is "A", and A, B, C, and D are set as acceptable levels.

### = Evaluation method =

Yield = ([Total number of produced batteries] - [Number of current collector foils with resin film in which at least one of misregistration/wire lead-out defect/wrinkle/bending occurred]) ÷ [Total number of batteries produced]

### = Evaluation standards =

A: 1.0
B: 0.8 or more and less than 1.0
C: 0.6 or more and less than 0.8
D: 0.5 or more and less than 0.6
E: less than 0.5

**[Table 2]**

| | | Evaluation | | | | |
|---|---|---|---|---|---|---|
| | | Misregistration | Wire lead-out suitability | Wrinkles | Bending | Yield |
| | 1 | 0 | 0 | 1 | 4 | D (0.5) |
| | 2 | 0 | 0 | 0 | 4 | C (0.6) |
| | 3 | 0 | 0 | 0 | 0 | A (1.0) |
| | 4 | 0 | 0 | 0 | 0 | A (1.0) |
| | 5 | 0 | 0 | 4 | 0 | C (0.6) |
| Example | 6 | 0 | 0 | 0 | 0 | A (1.0) |
| | 7 | 0 | 0 | 0 | 0 | A (1.0) |
| | 8 | 2 | 0 | 2 | 0 | C (0.6) |
| | 9 | 1 | 0 | 1 | 0 | B (0.8) |
| | 10 | 0 | 0 | 2 | 2 | C (0.6) |
| | 11 | 0 | 0 | 0 | 0 | A (1.0) |
| Comparative Example | 1 | 9 | 10 | 8 | 4 | E (0) |

As shown in Table 2, in the current collector foils with a resin film manufactured in Examples, metal foils were bonded to the resin film at desired positions with high accuracy and the occurrence of wrinkles was suppressed.

The current collector foils with a resin film, which were manufactured in Examples, were also excellent in each of the evaluation of wire lead-out suitability and the evaluation of the bending of a portion of the metal foil that was not heat fusion-welded to the resin film.

All the current collector foils with a resin film manufactured in Examples had a high yield as compared to the current collector foil with a resin film manufactured in Comparative Example.

### (Evaluation (6): energy density)

The energy densities (Wh/L) of the produced quasi-solid state batteries of Examples were measured as follows and the produced quasi-solid state batteries were evaluated according to the following evaluation standards.

The best evaluation rank is "A". Results are shown in Table 3.

### = Measurement method =

One battery was randomly selected from ten batteries manufactured in each of Examples, and the resin film (that is, the pouch) was bonded to end portions of the battery in a length direction and a width direction with a vacuum laminator.

The total capacity and the total volume of each battery were confirmed by predetermined methods. The total capacity of each battery was divided by the total volume to obtain the energy density (Wh/L) of each of the batteries of Examples and Comparative Example.

### = Evaluation standards =

A: 94.5 [Wh/L] or more
B: 93 [Wh/L] or more and less than 94.5 [Wh/L]
C: 89 [Wh/L] or more and less than 93 [Wh/L]
D: less than 89 [Wh/L]

### (Evaluation (7): adhesiveness between metal foil and resin film)

### = Evaluation method =

One metal foil was randomly selected from the evaluation samples obtained in each example. Adhesiveness between the metal foil and the resin film was evaluated with regard to the selected metal foil by a cross-cut test according to cross-cut JIS K 5600-5-6: 1999.

Results are shown in Table 3. The best evaluation rank is "A".

In Table 3, "adhesiveness between the metal foil and the resin film" was described as "adhesiveness".

### = Evaluation standards =

A: The metal foil was not peeled off.
B: One square of the metal foil was peeled off.
C: Two or more squares of the metal foil were peeled off.

**[Table 3]**

| | | Evaluation | |
|---|---|---|---|
| | | Energy density | Adhesiveness |
| | 1 | B | A |
| | 2 | B | A |
| | 3 | B | A |
| | 4 | B | A |
| | 5 | A | B |
| Example | 6 | C | A |
| | 7 | D | A |
| | 8 | C | A |
| | 9 | B | B |
| | 10 | A | C |
| | 11 | D | A |

### (Explanation of References)

10, 40: metal foil (metal foil to be cut)
11, 30, 52, 113: metal foil (cut metal foil)
11A: body
11B: tab portion
12, 41: gripping part
14, 42: cutting stage
16, 32, 44: movable stage
20, 43: cutting member
34, 45, 54: resin film
18, 36, 46: roller
38, 47: clutch roller
48: pair of transport rollers
49: punching member
49a, 56: opening portion
50: S: current collector foil
52a: metal foil not heat fusion-welded to resin film
110, 110A, 110B: movable stage
111: heating mechanism
112a, 112b: suction mechanism
114: suction hole
116: moving mechanism
d: heat insulating material
L1: length
L2: width
L3: length
L4: width
θ1: angle (wrap angle)
A1: A1 direction
A2: A2 direction
A3: A3 direction
A4: A4 direction
A5: A5 direction
A6: A6 direction
C1: C1 direction
C2: C2 direction
X: X direction

The entire disclosure of Japanese Patent Application No. 2022-159487, filed October 3, 2022, is incorporated into the present specification by reference.

All documents, patent applications, and technical standards disclosed in this specification are incorporated in this specification by reference so that the incorporation of each of the documents, the patent applications, and the technical standards by reference is specific and is as detailed as that in a case where the documents, the patent applications, and the technical standards are described individually.

## Claims

1. A method of manufacturing a current collector foil with a resin film, comprising:
a step A of cutting a metal foil for a current collector foil into sheets;
a step B of allowing a movable stage to hold the cut metal foil for each sheet by suction and allowing the movable stage to move the metal foil held by suction onto a resin film; and
a step C of bringing the resin film into contact with the metal foil to heat fusion-weld the resin film to the metal foil,
wherein the movable stage includes a plate-like body including a heating-suction region, and an area of the heating-suction region is smaller than an area of the cut metal foil.

2. The method of manufacturing a current collector foil with a resin film according to claim 1,
wherein, in the step C, the metal foil moved by the movable stage and the resin film wrapped around a roller are brought into contact with each other and the roller and the movable stage are moved relative to each other to heat fusion-weld the resin film to the metal foil.

3. The method of manufacturing a current collector foil with a resin film according to claim 1 or 2,
wherein a region in which the metal foil and the resin film are not heat fusion-welded to each other is formed at a part of the metal foil in the step C, and the method includes a step D of pressing a region of the metal foil, which is not heat fusion-welded to the resin film, against the resin film to flatten the region of the metal foil after the step C.

4. The method of manufacturing a current collector foil with a resin film according to claim 1 or 2,
wherein a thickness of the resin film is in a range of 4 µm to 50 µm.

5. The method of manufacturing a current collector foil with a resin film according to claim 4,
wherein the resin film includes a heat fusion-welded layer and a plastic substrate, and a thickness of the heat fusion-welded layer and a thickness of the plastic substrate satisfy a relationship shown in Expression 1, 0.1 ≤ [thickness of heat fusion-welded layer] ÷ [thickness of plastic substrate] ≤ 1.00.

6. The method of manufacturing a current collector foil with a resin film according to claim 1 or 2,
wherein the plate-like body, which includes the heating-suction region and is included in the movable stage, includes a plurality of suction holes and a thickness of the metal foil and an average opening diameter of the suction holes satisfy a relationship shown in Expression 2, 0.005 ≤ [thickness of metal foil] ÷ [average opening diameter of suction holes] ≤ 0.1.

7. The method of manufacturing a current collector foil with a resin film according to claim 1 or 2,
wherein the metal foil is a copper foil or an aluminum foil.
